# FASCICULE DE BREVET EUROPEEN

(11) **EP 3 757 643 B1**
(45) Date de publication et mention de la délivrance du brevet: **29.03.2023**
(21) Numéro de dépôt: 19183441.5
(22) Date de dépôt: 28.06.2019
(51) Int. Cl.: B60K 37/04, G02B 27/00, G02B 7/00, G02B 27/01, B60K 35/00

(54) **AFFICHEUR TÊTE HAUTE**
HEAD-UP-DISPLAY
HEAD-UP DISPLAY

(43) Date de publication de la demande: 30.12.2020
(73) Titulaire: Valeo Comfort and Driving Assistance, 94046 Créteil Cedex (FR)
(72) Inventeur: BLANC, Eric, 94046 Créteil CEDEX (FR); LE TOUMELIN, Loic, 94046 Créteil CEDEX (FR); SAUZAY, Laurent, 94046 Créteil CEDEX (FR); DELPIERRE, Laurent, 94046 Créteil CEDEX (FR)
(74) Mandataire: Delplanque, Arnaud

(56) Documents cités:
- EP-A1- 3 521 886
- EP-A2- 3 070 511
- WO-A1-2016/121269
- DE-A1-102015 016 504
- JP-A- 2003 118 426
- US-A1- 2019 075 689

## Description

La présente invention concerne de manière générale les afficheurs tête haute pour véhicule.

Elle concerne plus particulièrement un afficheur tête haute comprenant un boîtier et un système d'aération adapté pour autoriser une circulation d'air entre l'intérieur du boîtier et le milieu extérieur.

Le principe des afficheurs tête haute pour véhicule est de projeter des images, notamment utiles à la conduite, directement dans le champ de vision d'un conducteur.

Pour cela, les afficheurs tête haute comprennent, en général, un boîtier, un dispositif de génération d'images, situé au moins en partie dans le boîtier, apte à produire un faisceau lumineux, et un système électronique, situé au moins en partie dans le boîtier, apte à piloter le dispositif de génération d'images.

Le dispositif de génération d'images est adapté pour générer au moins un faisceau lumineux et un système de projection d'images transmet le faisceau lumineux généré vers une lame partiellement transparente, disposée de manière à recevoir ce faisceau lumineux et placée dans le champ de vision du conducteur.

La taille du boîtier des afficheurs tête haute ne cesse d'augmenter, ce qui induit un risque de condensation de la vapeur d'eau dans le boîtier pouvant conduire à une altération des fonctions optiques et/ou électroniques. Des afficheurs tête haute conventionnels sont divulgués dans les documents JP 2003 118426 A, WO 2016/121269 A1, DE 10 2015 016504 A1, EP 3 070 51 A2, US 2019/075689 A1.

Afin de résoudre ce problème, l'afficheur tête haute, tel que mentionnée ci-dessus comprend un boîtier comprenant un système d'aération adapté pour autoriser une circulation d'air entre l'intérieur du boîtier et le milieu extérieur.

Ainsi, le dispositif de génération d'images sera traversé par au moins un canal de flux d'air frais qui réduira les risques de condensation de la vapeur d'eau sur ses composants fonctionnels. La condensation (produite notamment à cause des variations de températures liées aux phases successives d'allumage et d'extinction de l'afficheur tête haute) est en effet notamment problématique en ce que cette condensation peut altérer la qualité des surfaces optiques et à long terme provoquer une dégradation des composants électroniques.

Un afficheur tête haute selon l'invention est défini dans la revendication indépendante 1. Des modes de réalisations préférentiels sont définis dans les revendications dépendantes.

La description qui va suivre en regard du dessin annexé, donné à titre d'exemple non limitatif, fera bien comprendre en quoi consiste l'invention et comment elle peut être réalisée.

Sur les dessins annexés :
[Fig.1] est une représentation schématique de principe d'un afficheur tête haute selon l'invention en position dans un véhicule ;
[Fig 2] est une vue schématique en coupe d'un afficheur tête haute selon l'invention.

En préliminaire, on notera que les éléments identiques ou similaires des différents modes de réalisation de l'invention représentés sur les différentes figures seront, dans la mesure du possible, référencés par les mêmes signes de référence et ne seront pas décrits à chaque fois.

Sur les figures, les proportions ne sont pas respectées afin de faire mieux ressortir la constitution des éléments présentés ci-dessous à titre d'exemples.

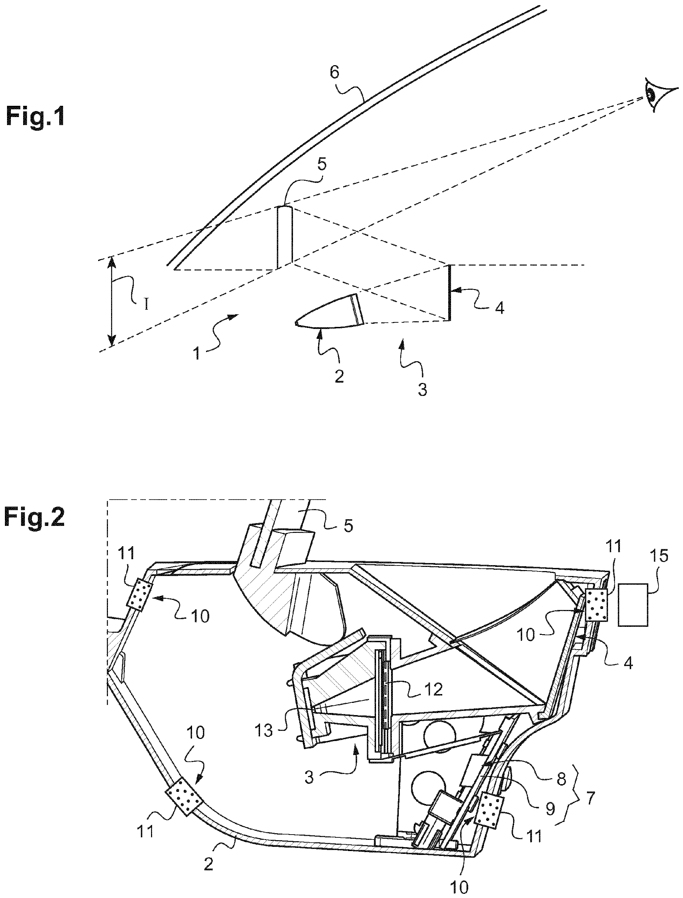

Sur la figure 1, on a schématiquement représenté les éléments principaux d'un afficheur tête haute 1 destiné à équiper un véhicule, par exemple un véhicule automobile.

Un tel afficheur 1 est adapté à créer une image virtuelle I dans le champ de vision d'un conducteur du véhicule, de sorte que le conducteur puisse voir cette image virtuelle I et les informations éventuelles qu'elle contient sans avoir à détourner le regard de la route empruntée.

A cet effet, l'afficheur tête haute 1 comprend un boîtier 2 et un dispositif de génération d'image 3 qui produit un faisceau lumineux représentant une image à afficher.

En aval du dispositif de génération d'image 3 selon le sens de déplacement du faisceau lumineux, ledit afficheur 1 comprend un système de projection 4 et une lame partiellement transparente 5.

En variante, la lame partiellement transparente 5 peut être confondue avec le parebrise 6 du véhicule.

Le système de projection 4 est conçu pour projeter le faisceau lumineux produit par le dispositif de génération d'image 3 en direction de la lame partiellement transparente 5. Le système de projection 4 est donc interposé sur le trajet du faisceau lumineux entre le dispositif de génération d'image 3 et la lame partiellement transparente 5.

Le système de projection 4 peut comprendre, en pratique, un ou plusieurs miroirs plans ou concaves et/ou d'autres éléments optiques.

L'intérieur du boîtier 2 de l'afficheur tête haute est visible sur la figure 2. Selon cet exemple illustré, le boîtier 2 comprend le dispositif de génération d'images 3 et un système électronique 7 apte à piloter le dispositif de génération d'images 3.

Le système électronique 7 comprend un circuit électronique 8 comprenant au moins un circuit imprimé 9.

L'invention vise à diminuer le risque de condensation dans le boîtier 2. A cet effet, le boîtier 2 comprend un système d'aération adapté pour autoriser une circulation d'air entre l'intérieur du boîtier 2 et le milieu extérieur, en l'espèce, l'habitacle du véhicule.

Selon l'exemple illustré, le boîtier 2 comporte des ouvertures d'aération 10 en vis-à-vis qui permettent à l'air extérieur de pénétrer à l'intérieur du boîtier 2. Bien entendu, les dimensions et les formes des ouvertures d'aération 10 sont adaptées en fonction de la taille du boîtier 2 et de la chaleur thermique générée par un écran rétroéclairé 12 du dispositif de génération d'images 3 lorsque cet écran 12 est éclairé par au moins une source de lumière 13. À titre d'exemples non limitatif, les ouvertures d'aération 10 délimitent des passages dont la surface au niveau d'une face extérieure est comprise entre 5x15 mm² et 30x90 mm², de préférence 10×30mm² et 20x60 mm². Selon le présent exemple, les ouvertures d'aération 10 sont de forme sensiblement parallélépipédique et chaque ouverture d'aération 10 délimite un passage dont le volume est compris entre 5x15x40 mm³ et 30x90x50 mm³, de préférence 15x30x45 mm³ et 20x60x45 mm³.

Le système d'aération comprend ici en outre des membranes de filtration 11 obturant les ouvertures 10, apte à empêcher le passage des particules solides et autoriser le passage de l'air et de la vapeur d'eau.

Les membranes de filtration 11 recouvrent les ouvertures d'aération 10 au niveau des faces extérieures du boîtier 2. Plus précisément, les membranes de filtration 11 sont configurées pour empêcher le passage de particules dont la plus petite dimension est égale ou supérieure à 0,07 µm, de préférence égale ou supérieure à 0,1 µm. Les membranes de filtration 11 comportent une face adhésive permettant leur positionnement et leur maintien sur une face extérieure du boîtier 2. Les membranes de filtration 11 empêchent ainsi l'introduction de particules ou de poussières dans le boîtier 2, tout en permettant un mouvement de convection de l'air ambiant entre l'intérieur et l'extérieur du boîtier 2. De préférence, les membranes de filtration 11 sont configurées pour permettre un écoulement de l'air ambiant à travers les ouvertures d'aération 10, selon un débit d'air égal ou supérieur à 10 L/h à une pression de 70 mbar.

Les membranes de filtration 11 sont également de couleur sombre et configurées pour empêcher à la lumière ambiante de pénétrer dans le boîtier 2, de manière à préserver l'intensité du faisceau lumineux émis par la source de lumière.

À titre d'exemple non limitatif, une membrane de filtration 11 selon l'invention peut par exemple être un produit commercialisé par la société « GORE », sous la référence « Automotive Vents for Exterior Lighting ».

Afin de favoriser l'écoulement de l'air dans le boîtier 2, les ouvertures d'aérations 10 traversent des parois opposées du boîtier 2. De préférence, les ouvertures d'aération 10 sont agencées de manière à être traversantes du boîtier 2 afin que l'air ambiant passant par lesdites ouvertures 10 s'écoule près d'un écran rétroéclairé 12. Selon le présent exemple, une première ouverture d'aération 10 est accolée au circuit imprimé 9, une deuxième ouverture d'aération 10 est située dans la partie basse du boîtier 2, près du dispositif de génération d'images 3, une troisième ouverture d'aération 10 est située dans la partie haute du boîtier 2 et une quatrième ouverture d'aération 10 est située dans la partie haute du boîtier 2 à proximité du système de projection 4. Ainsi, le risque de condensation de la vapeur d'eau est diminué sur les parties fonctionnelles situées dans le boîtier 2 de l'afficheur tête haute 1.

Le système d'aération peut comprendre en outre des moyens de génération de flux d'air 14 aptes à générer un flux d'air forcé au travers des ouvertures d'aération 10.

Selon l'exemple illustré, un pulseur d'air 15 est agencé sur le boîtier 2, en vis-à-vis d'une ouverture d'aération 10 obstruée par une membrane de filtration 11 décrite ci-dessus. Bien entendu, le fonctionnement du pulseur d'air 15 peut être contrôlé par l'intermédiaire d'une unité de commande non représentée sur la figure 2, en fonction du fonctionnement de l'afficheur 1 et/ou de la température de l'écran rétroéclairé 12. De préférence, le pulseur d'air 15 est configuré pour établir un écoulement d'air forcé à travers le boîtier 2 qui soit suffisant pour permettre son refroidissement et ainsi éviter la détérioration de ses composants internes.

Bien entendu, diverses autres modifications peuvent être apportées à l'invention dans le cadre des revendications annexées.

## Revendications

1. Afficheur tête haute (1) comprenant :
- un boîtier (2),
- un dispositif de génération d'images (3), situé au moins en partie dans le boîtier, apte à produire un faisceau lumineux, et
- un système électronique, situé au moins en partie dans le boîtier (2), apte à piloter le dispositif de génération d'images (3),
le boîtier (2) comprenant un système d'aération adapté pour autoriser une circulation d'air entre l'intérieur du boîtier (2) et le milieu extérieur, le système d'aération comprenant des ouvertures d'aération (10) du boîtier (2) et, au niveau d'au moins une ouverture d'aération (10), des moyens de filtration apte à empêcher le passage des particules solides et autoriser le passage de l'air et de la vapeur d'eau, les moyens de filtration étant configurés pour empêcher le passage de particules dont la plus petite dimension est égale ou supérieure à 0,07 µm,
**caractérisé en ce que**
les moyens de filtration comprennent une membrane de filtration (11) obturant les ouvertures (10), ladite membrane de filtration (11) comportant une face adhésive permettant son maintien sur une face extérieure du boîtier (2).

2. Afficheur tête haute selon la revendication 1, **caractérisé en ce que** la membrane de filtration (11) est configurée pour permettre à l'air ambiant de s'écouler à travers au moins une ouverture d'aération, selon un débit d'air égal ou supérieur à 10 L/h à une pression de 70 mbar.

3. Afficheur tête haute selon l'une des revendications précédentes, **caractérisé en ce qu'**il comprend un système de projection (4), apte à diriger le faisceau lumineux produit par le dispositif de génération d'images (3) en direction d'une lame partiellement transparente (5) située dans le champ de vision d'un conducteur.

4. Afficheur tête haute selon l'une des revendications 1 à 3, **caractérisé en ce qu'**au moins deux ouvertures d'aération (10) sont en vis-à-vis des parois du boîtier (2).

5. Afficheur tête haute selon l'une des revendications précédentes, **caractérisé en ce que** le système d'aération comprend des moyens de génération de flux d'air aptes à générer un flux d'air forcé au travers des ouvertures d'aération.

6. Afficheur tête haute selon la revendication précédente, **caractérisé en ce que** les moyens de génération de flux d'air comprennent un pulseur d'air (15).

## Patentansprüche

1. Head-up-Anzeige (1), umfassend:
- ein Gehäuse (2),
- eine Bilderzeugungsvorrichtung (3), die sich wenigstens teilweise im Gehäuse befindet, die geeignet ist, ein Lichtbündel zu erzeugen, und
- ein elektronisches System, das sich wenigstens teilweise im Gehäuse (2) befindet, das geeignet ist, die Bilderzeugungsvorrichtung (3) zu steuern,
wobei das Gehäuse (2) ein Lüftungssystem umfasst, das geeignet ist, eine Luftzirkulation zwischen dem Inneren des Gehäuses (2) und der Außenumgebung zu erlauben, wobei das Lüftungssystem Lüftungsöffnungen (10) des Gehäuses (2) und an wenigstens einer Lüftungsöffnung (10) Filtermittel umfasst, die geeignet sind, den Durchtritt der festen Teilchen zu verhindern und den Durchtritt der Luft und des Wasserdampfs zu erlauben, wobei die Filtermittel dazu ausgebildet sind, den Durchtritt von Teilchen zu verhindern, deren kleinste Abmessung gleich oder größer als 0,07 um ist, **dadurch gekennzeichnet, dass** die Filtermittel eine Filtermembran (11) umfasst, die die Öffnungen (10) verschließt, wobei die Filtermembran (11) eine Haftseite aufweist, die ihren Halt auf einer Außenseite des Gehäuses (2) ermöglicht.

2. Head-up-Anzeige nach Anspruch 1, **dadurch gekennzeichnet, dass** die Filtermembran (11) dazu ausgebildet ist, es der Umgebungsluft zu ermöglichen, durch wenigstens eine Lüftungsöffnung mit einem Luftdurchsatz gleich oder größer als 10 L/h bei einem Druck von 70 mbar zu strömen.

3. Head-up-Anzeige nach einem der vorhergehenden Ansprüche, **dadurch gekennzeichnet, dass** sie ein Projektionssystem (4) umfasst, das geeignet ist, das Lichtbündel, das von der Bilderzeugungsvorrichtung (3) erzeugt wird, in Richtung einer teilweise transparenten Scheibe (5) zu leiten, die sich im Sichtfeld eines Fahrers befindet.

4. Head-up-Anzeige nach einem der Ansprüche 1 bis 3, **dadurch gekennzeichnet, dass** sich wenigstens zwei Lüftungsöffnungen (10) gegenüber den Wänden des Gehäuses (2) befinden.

5. Head-up-Anzeige nach einem der vorhergehenden Ansprüche, **dadurch gekennzeichnet, dass** das Lüftungssystem Luftstrom-Erzeugungsmittel umfasst, die geeignet sind, einen Luftstrom zu erzeugen, der durch die Lüftungsöffnungen gedrückt wird.

6. Head-up-Anzeige nach dem vorhergehenden Anspruch, **dadurch gekennzeichnet, dass** die Luftstrom-Erzeugungsmittel ein Gebläse (15) umfassen.

## Claims

1. Head-up display (1) comprising:
- a housing (2),
- an image generation device (3), situated at least partly in the housing, capable of producing a light beam, and
- an electronic system, situated at least partly in the housing (2), capable of driving the image generation device (3),
the housing (2) comprising
a ventilation system suitable for allowing a circulation of air between the inside of the housing (2) and the outside environment,
the ventilation system comprising ventilation apertures (10) of the housing (2) and, in at least one ventilation aperture (10), filtration means capable of preventing the passage of solid articles and allowing the passage of air and water vapour, the filtration means being configured to prevent the passage of particles whose smallest dimension is equal to or greater than 0.07 µm,
**characterized in that** the filtration means comprise a filtration membrane (11) blocking the apertures (10), said filtration membrane (11) comprising an adhesive face allowing it to be held on an outer face of the housing (2) .

2. Head-up display according to Claim 1,
**characterized in that** the filtration membrane (11) is configured to allow the ambient air to flow through at least one ventilation aperture, according to an air flow rate equal to or greater than 10 l/h at a pressure of 70 mbar.

3. Head-up display according to one of the preceding claims, **characterized in that** it comprises a projection system (4), capable of directing the light beam produced by the image generation device (3) towards a partially transparent plate (5) situated in the field of view of a driver.

4. Head-up display according to one of Claims 1 to 3, **characterized in that** at least two ventilation apertures (10) are opposite walls of the housing (2).

5. Head-up display according to one of the preceding claims, **characterized in that** the ventilation system comprises air flow generation means capable of generating a forced air flow through the ventilation apertures.

6. Head-up display according to the preceding claim, **characterized in that** the air flow generation means comprise an air blower (15).
